# EUROPÄISCHE PATENTSCHRIFT

(11) **EP 2 499 022 B1**
(45) Veröffentlichungstag und Bekanntmachung des Hinweises auf die Patenterteilung: **18.03.2015**
(21) Anmeldenummer: 10782549.9
(22) Anmeldetag: 12.11.2010
(51) Int. Cl.: B60P 1/44

(54) **HUBLADEBÜHNE UND VERFAHREN ZUM BETRIEB DERSELBEN**
LIFTING LOADING PLATFORM AND METHOD FOR OPERATING THE SAME
HAYON ÉLÉVATEUR ET PROCÉDÉ DE FAIRE FONCTIONNER LA MEME

(30) Priorität: 12.11.2009 DE 102009052662
(43) Veröffentlichungstag der Anmeldung: 19.09.2012
(73) Patentinhaber: MBB Palfinger GmbH, 27777 Ganderkesee (DE)
(72) Erfinder: BLEY, Hubert, 49681 Garrel (DE); HÄRTEL, Thomas, 26209 Hatten (DE)
(74) Vertreter: Möller, Friedrich
(86) Internationale Anmeldenummer: PCT/EP2010/006903
(87) Internationale Veröffentlichungsnummer: WO 2011/057799

(56) Entgegenhaltungen:
- WO-A1-2008/104317
- DE-A1-102006 062 231
- DE-A1-102007 012 991

## Beschreibung

Die Erfindung betrifft ein Verfahren zum Betrieb einer Hubladebühne gemäß dem Oberbegriff des Anspruchs 1 bzw. 7 sowie eine Hubladebühne gemäß dem Oberbegriff des Anspruchs 10.

Hubladebühnen dienen dazu, das Be- und Entladen von Fahrzeugen aller Art, und zwar angetriebene Fahrzeuge als auch nicht angetriebene Fahrzeuge, wie gezogene Anhänger, mit vor allem schweren Gütern zu erleichtern. Eine solche Hubladebühne verfügt über eine in der Regel an der Rückseite eines Aufbaus eines Fahrzeugs heb-, senkbar und schwenkbar angelenkte Ladeplattform. Die Ladeplattform ist mittels eines Hubwerks an der Rückseite des Aufbaus des Fahrzeugs angeordnet. Das Hubwerk weist mindestens einen Lineartrieb auf, der das Heben bzw. Senken der Ladeplattform herbeiführt. Außerdem weist das Hubwerk wenigstens einen Lineartrieb auf, der zum Verschwenken der Ladeplattform dient. Eine solche Hubladebühne ist aus der DE 10 2006 062 231 A1 bekannt. Diese Hubladebühne ist mit hydraulischen Lineartrieben versehen.

Beim Beladen federt das Fahrzeug zunehmend ein. Das Heck des Fahrzeugs senkt sich dabei mit der Hubladebühne ab. Beim Entladen werden die Federn des Fahrzeugs entlastet, so dass sich das Heck der Hubladebühne anhebt. Wenn beim Entladen sich das Heck des Fahrzeugs mit der Hubladebühne anhebt, wird dabei die Ladeplattform vom Boden etwas beabstandet oder bei an einer Rampe stehendem Fahrzeug die auf die Rampe aufliegende Hinterkante (Spitze) der Ladeplattform angehoben. Beim Beladen des Fahrzeugs hingegen drückt das sich zunehmend absenkende Heck des Fahrzeugs die Ladeplattform auf den Boden oder die Spitze der Ladeplattform auf die Rampe. Die Folge ist, dass das Heck des Fahrzeugs sich zunehmend auf der Hubladebühne abstützt. Das kann zu Schäden insbesondere des Hubwerks der Hubladebühne führen.

Sicherheitsvorschriften lassen es nur zu, die Ladeplattform automatisch, das heißt ohne eine kontrollierte manuelle Betätigung, hochzuschwenken oder anzuheben. Bei Ladeplattformen mit hydraulischen Lineartrieben wird durch eine sogenannte Schwimmstellung erreicht, dass beim Einfedern des Fahrzeugs während des Beladevorgangs die Ladeplattform sich frei hochbewegen kann, während in umgekehrter Richtung die Ladeplattform sich nicht frei absenken oder zurückschwenken kann.

Es gibt aber auch Hubladebühnen mit mechanischen Lineartrieben, die zum Beispiel als elektromotorisch betriebene Spindelantriebe ausgebildet sind. Diese Spindelantriebe sind entweder selbsthemmend oder durch Bremsen stillsetzbar, damit sie keine unkontrollierten Bewegungen ausführen. Bremsen können aber nicht so wie Hydraulikventile in nur eine Richtung gelöst werden, so dass sie zwar ein selbsttätiges Hochschwenken bzw. Anheben der Ladeplattform zulassen, nicht aber ein Absenken oder Herunterschwenken derselben. Die Folge ist, dass es gesetzlich nicht zulässig ist, bei Hubladebühnen mit von Elektromotoren betriebenen mechanischen Lineartrieben die Bremsen beim Beladen ständig gelöst zu lassen.

Nach alledem liegt der Erfindung die Aufgabe zugrunde, eine Hubladebühne und ein Verfahren zum Betreiben derselben zu schaffen, deren mechanische Lineartriebe auf einfache Weise und unter Einhaltung der Sicherheitsvorschriften beim Einfedern des Fahrzeugs während des Beladens entlastbar sind.

Ein Verfahren zur Lösung dieser Aufgabe weist die Maßnahmen des Anspruchs 1 auf. Demnach ist vorgesehen, eine Veränderung der Einfederung des Fahrzeugs sensorisch zu erfassen und in Abhängigkeit von den sensorisch erfassten Werten die Neigung bzw. die Höhe der Ladeplattform zu verändern. Federt das Fahrzeug beispielsweise beim Beladen ein, senkt sich das Heck mit der Hubladebühne ab. Das führt bei durch Bremsen arretierten mechanischen Lineartrieben zu einer Belastung der Hubladebühne, weil dann die Spitze der Ladeplattform auf einer Rampe oder sich die ganze Ladeplattform auf dem Boden abstützt. Durch die sensorische Erfassung dieser Einfederung oder der dadurch hervorgerufenen Veränderung der Relativlage der Hubladebühne ist es möglich, im Falle der Beladung des Fahrzeugs und das dadurch hervorgerufene Absenken des Hecks beispielsweise Bremsen der mechanischen Lineartriebe kurzzeitig zu lösen, wodurch die Hubladebühne entlastet bzw. entspannt wird, indem sie entsprechend der Einfederung des Fahrzeugs selbsttätig hochgeschwenkt oder hochgezogen wird. Dabei ist es vorgesehen, dass von den Sensoren die Winkelstellung der Ladeplattform, insbesondere ihre Abweichung von der Horizontalen, und die Winkelstellung eines Lenkerarms des Hubwerks vorzugsweise fortlaufend ermittelt werden. Die Sensoren der Ladeplattform und am Lenkerarm des Hubwerks stellen sicher, dass in jedem Fall die Einfederung des Fahrzeugs beim Beladen detektiert wird, und zwar sowohl bei der Abstützung der Spitze der Ladeplattform auf einer Rampe als auch bei der Abstützung der gesamten Ladeplattform auf dem Boden. In jedem Falle ändert sich die Relativstellung mindestens eines Sensors, so dass daraufhin durch eine gezielte Anpassung der Lage, insbesondere ein gezieltes Hochschwenken oder Hochfahren der Ladeplattform, eine durch die Einfederung des Fahrzeugs in der Hubladebühne sich einstellende Spannung abgebaut wird.

Eine bevorzugte Ausgestaltung des Verfahrens sieht es vor, dass Stellungen ausgewählter Komponenten der Hubladebühne ermittelt werden und beim Überschreiten bestimmter Vorgaben die Lage der Ladeplattform entsprechend angepasst, vorzugsweise hochgeschwenkt bzw. hochgefahren wird. Die Stellungen lassen sich mit Positionssensoren, vorzugsweise Neigungssensoren, ermitteln, wobei vorzugsweise die Neigungssensoren an der Hubladebühne angebracht werden können, so dass Modifikationen am Fahrzeug nicht erforderlich sind.

Das Verfahren sieht es nach einer weiteren vorteilhaften Ausgestaltung der Erfindung vor, vor dem Beladen des Fahrzeugs eine Differenz der Winkelwerte der Sensoren zu ermitteln und hiermit die Differenz der Winkelwerte während des Beladevorgangs des Fahrzeugs zu vergleichen. Wenn sich hierbei eine Abweichung einstellt, die eine vorgegebene zulässige Abweichung überschreitet, wird die Ladeplattform angehoben oder hochgeschwenkt, um die gesamte Hubladebühne zu entlasten. Durch diese Verfahrensweise wird erreicht, dass nicht bei jeder geringsten Änderung der Neigung eines Sensors die Ladeplattform hochgeschwenkt oder hochgefahren wird; sondern erst dann, wenn eine signifikante Einfederung des Fahrzeugs erfolgt ist. Dabei kommt es beim geringen Anheben der Ladeplattform oder nur der Spitze derselben aufgrund des Spiels in den mechanischen Lineartrieben und der Verbindung derselben mit dem Hubwerk und der Ladeplattform noch zu keinen nennenswerten Spannungen in der Hubladebühne. Erst wenn dieses Spiel ausgeglichen ist und durch das weitere Einfedern des Fahrzeugs es tatsächlich zu einer Kraftausübung auf die Ladeplattform im vorspannenden Sinne kommt, wird ein Ausgleich durch ein Entspannen der mechanischen Lineartriebe herbeigeführt. Bei nicht selbsthemmenden mechanischen Lineartrieben wird durch Bremsen sichergestellt, dass die Ladeplattform in der eingestellten Position verbleibt, sich also nicht in unerwünschter Weise senken, heben oder verschwenken kann. Wird beim Beladen des Fahrzeugs von den Sensoren festgestellt, dass mit dem Einfedern des Fahrzeugs die Ladeplattform im hebenden oder hochschwenkenden Sinne belastet wird, wird durch kurzzeitiges Lösen der Bremsen das Hubwerk der Hubladebühne sozusagen entspannt.

Bei Hubladebühnen mit selbsthemmenden mechanischen Lineartrieben wird beim Beladen des Fahrzeugs in Abhängigkeit von der mittels der Sensoren festgestellten Einfederung des Hecks des Fahrzeugs der elektromotorische Antrieb der mechanische Lineartriebe kurzzeitig in dem Sinne betätigt, dass die Ladeplattform etwas angehoben oder hochgeschwenkt wird und es dadurch zu einer Entspannung der beim Einfedern des Hecks des Fahrzeugs vorgespannten Hubladebühne kommt.

Eine weitere Lösung der eingangs genannten Aufgabe, wobei es sich auch um eine bevorzugte Weiterbildung des zuvor beschriebenen Verfahrens handeln kann, weist die Merkmale des Anspruchs 7 auf. Demnach ist vorgesehen, einen elektromotorischen Antrieb der mechanischen Lineartriebe zu stoppen, wenn von mindestens einem Sensor festgestellt wird, dass die Ladeplattform und/oder ein Lenkerarm des Hubwerks sich nicht mehr nennenswert weiterbewegen. Es wird auf diese Weise eine einfache Überlastsicherung geschaffen. Besonders dann, wenn ohnehin Sensoren für andere Zwecke an der Hubladebühne erforderlich sind, ist die Abschaltung der Bewegung der Lineartriebe so auf einfache Weise ohne speziell zu diesem Zweck erforderliche Sensoren möglich.

Bevorzugt ist vorgesehen, den Antrieb mindestens eines Lineartriebs abzuschalten, wenn wenigstens ein ermittelter Winkelwert in einem bestimmten Zeitintervall unverändert bleibt. Durch die Betrachtung eines Zeitintervalls wird erreicht, dass nicht schon eine Unstetigkeit in der Bewegung der Hubladebühne zu einem Abschalten führt, sondern erst eine Abschaltung erfolgt, wenn über das ganze, vorzugsweise wählbare, Zeitintervall hinweg, der oder jeder ermittelte Winkelwert sich nicht ändert.

Eine weitere bevorzugte Ausgestaltung des Verfahrens sieht es vor, dass der Winkelwert nur bei solchen Bewegungen der Hubladebühne ermittelt wird, die zu einer Überlastung des jeweiligen Lineartriebs führen können. Besonders wichtig sind die Überwachung der Absenk- und Abklappbewegung der Ladeplattform. Bei diesen Bewegungen wird die Ladeplattform gegen den Boden gefahren oder mit ihrer Spitze auf der Rampe abgelegt.

Bei diesen Bewegungen, die wegen sich ständig ändernder örtlicher Gegebenheiten nicht durch Endschalter oder dergleichen abgesichert werden können, ist es besonders vorteilhaft, das erfindungsgemäße Verfahren einzusetzen.

Eine Hubladebühne zur Lösung der eingangs genannten Aufgabe weist die Merkmale des Anspruchs 10 auf. Es ist vorgesehen, der Ladeplattform und dem Hubwerk jeweils einen Bewegungen erfassenden Sensor zuzuordnen. Außerdem ist eine Steuerung für Bremsen oder elektromotorische Antriebe der mechanischen bzw. getrieblichen Lineartriebe vorgesehen. Mit der Steuerung erfolgt ein gezieltes Lösen der Bremsen oder ein gezielter Betrieb der Elektromotoren in Abhängigkeit von den Signalen der Sensoren. Wenn demnach die Sensoren feststellen, dass die Einfederung beim Beladen des Fahrzeugs die Ladeplattform und/oder das Hubwerk der Hubladebühne bewegen, führt die Steuerung ein gezieltes kurzzeitiges Lösen der Bremsen der mechanischen Lineartriebe oder einen kurzen Antrieb der Lineartriebe durch. Das führt zu einem automatischen bzw. selbsttätigen "Nachgeben" der Hubladebühne und insbesondere eine Anpassung der Ladeplattform an die Einfederung des Fahrzeugs. Es werden so wie bei der sogenannten Schwimmstellung hydraulischer Lineartriebe auch Hubladebühnen mit elektromotorisch betriebenen mechanischen Lineartrieben vor Überlastungen geschützt.

Bevorzugt ist es vorgesehen, die Sensoren als Winkelwerte erfassende Neigungssensoren auszubilden. Die Neigungssensoren eignen sich besonders, weil beim zunehmenden Einfedern des Fahrzeugs die von der auf dem Boden aufliegenden oder mit der Spitze sich auf der Rampe abstützenden Ladeplattform auf das Hubwerk übertragende Kraft zunächst dazu führt, das natürliche Spiel der mechanischen Lineartriebe und die Anlenkung der Lineartriebe an das Hubwerk und die Ladeplattform auszugleichen. Aufgrund des Ausgleichs dieses Spiels kommt es zu einer Veränderung der Neigung der Ladeplattform oder auch bestimmter Komponenten des Hubwerks, die besonders wirksam von Neigungssensoren detektierbar ist.

Es ist weiterhin vorgesehen, Neigungssensoren sowohl der Ladeplattform als auch mindestens einem Lenkerarm des Hubwerks zuzuordnen. Dadurch ist ein Vergleich der von den Neigungssensoren gelieferten Winkelwerte möglich, der Aufschluss darüber gibt, ob infolge des natürlichen Spiels der mechanischen Lineartriebe und zwischen der Ladeplattform sowie dem Hubwerk und den Lineartrieben sich eine Veränderung des von mindestens einem Neigungssensor ermittelten Winkelwert ergibt, woraus zuverlässig der Schluss herleitbar ist, dass infolge zunehmender Beladung das Fahrzeug so weit eingefedert ist, dass sich die Ladeplattform auf der Erde oder auf der Rampe abstützt. Die Hubladebühne kann dann "entspannt" werden durch kurzzeitiges Lösen der Bremsen der Lineartriebe oder kurzzeitige Betätigung der Antriebe selbsthemmender Lineartriebe.

Bevorzugte Ausführungsbeispiele der Erfindung werden nachfolgend anhand der Zeichnung näher erläutert. In dieser zeigen:
- Fig. 1: ein an eine Rampe herangefahrenes Fahrzeug mit einer Hubladebühne,
- Fig. 2: eine Darstellung gemäß der Fig. 1, bei der das Fahrzeug mit einem Gegenstand beladen ist,
- Fig. 3: ein Fahrzeug mit einer Hubladebühne, deren Ladeplattform auf dem Boden aufliegt, und
- Fig. 4: eine Darstellung analog zur Fig. 3, bei der das Fahrzeug mit einem Gegenstand beladen ist.

Die Figuren zeigen einen hinteren Teil eines Fahrzeugs, und zwar eines Lastkraftwagens 10. Der Lastkraftwagen 10 verfügt über einen in den Figuren nicht dargestellten Aufbau, bei dem es sich beispielsweise um einen sogenannten Kofferaufbau handelt. Einer Rückseite 11 des Lastkraftwagens 10 ist eine Hubladebühne 12 zugeordnet.

Die Hubladebühne 12 verfügt über ein Hubwerk 13, das an einem nur andeutungsweise in den Figuren dargestellten Tragrohr 14 befestigt ist. Das sich quer zur Längsrichtung des Lastkraftwagens 10 erstreckende Tragrohr 14 ist mit einem In den Figuren nicht dargestellten Rahmen des Lastkraftwagens 10 verbunden. Die Ladeplattform 15 ist mit einer zur Rückseite 11 des Lastkraftwagens 10 weisenden Querkante 16 schwenkbar am Hubwerk 13 angelenkt. Die Ladeplattform 15 ist außerdem vom Hubwerk 13 absenkbar und anhebbar.

Das in den Figuren nur teilweise dargestellte Hubwerk 13 weist bevorzugt zwei gleiche, in parallelen und vertikalen Ebenen synchron verschwenkbare Lenkerarme 17 auf. Die Lenkerarme 17 sind gelenkig an der Querkante 16 der Ladeptattform 15 angelenkt.

Das in den Figuren gezeigte Hubwerk 13 weist im Bereich jedes Lenkerarms 17 einen Lineartrieb oder auch zwei Lineartriebe zum Heben und Senken der Ladeplattform 15 und mindestens einen Lineartrieb zum Verschwenken der Ladeplattform 15 auf. In den Figuren sind die Lineartriebe nicht gezeigt. Die prinzipiell gleich ausgebildeten Lineartriebe sind bei der gezeigten Hubladebühne 12 als mechanische bzw. getriebliche Lineartriebe ausgebildet. Beispielsweise handelt es sich hierbei um Spindeltriebe, deren Spindeln auf ihrer Längsachse axial verfahrbar sind durch drehend antreibbare Spindelmuttern oder dergleichen. Die Spindelmuttern werden bevorzugt von Elektromotoren drehend angetrieben.

Die mechanischen Lineartriebe, insbesondere wenn sie als Spindeltriebe ausgebildet sind, können sowohl selbsthemmend als auch nicht selbsthemmend ausgebildet sein. Zumindest bei nicht selbsthemmenden mechanischen Lineartrieben sind Bremsen vorgesehen, und zwar bevorzugt elektrische bzw. elektromagnetische Bremsen. Diese Bremsen sorgen dafür, dass die Ladeplattform 15 in der eingestellten Position verharrt, damit sich die Höhe und die Neigung der Ladeplattform 10 nicht unkontrolliert ändern. Aus Sicherheitsgründen darf es nämlich nicht möglich sein, dass die Ladeplattform 15 unkontrolliert absinkt oder zurückschwenkt.

Bei mechanischen Lineartrieben, die selbsthemmend sind, können die Bremsen entfallen. Diese Lineartriebe können ihre Position, insbesondere Länge, aber nur verändern, wenn sie von einem Elektromotor oder dergleichen angetrieben werden. Gleichwohl können auch bei selbsthemmenden mechanischen Lineartrieben noch Bremsen vorgesehen sein, und zwar vor allem dann, wenn es die gesetzlichen Vorschriften erfordern.

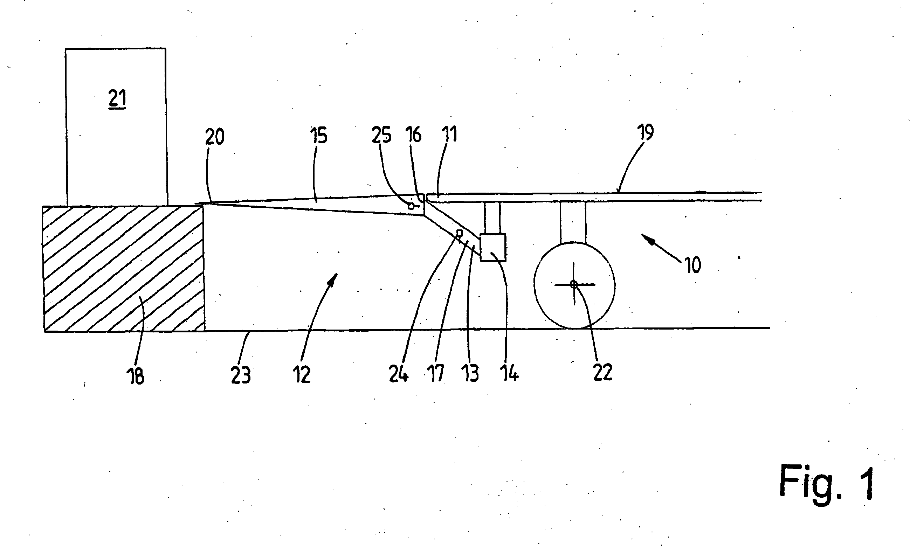

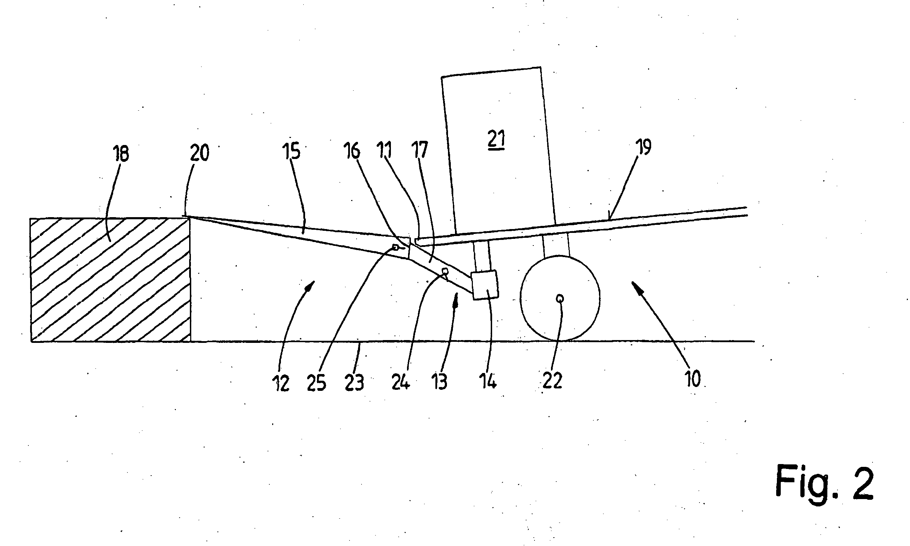

Die Fig. 1 und 2 zeigen das Beladen des Fahrzeugs von einer Rampe 18 aus. In diesem Falle bildet die Ladeplattform 15 der Hubladebühne 12 eine Art Brücke zwischen der Rückseite 11 der Ladefläche 19 des Lastkraftwagens 10 und der Rampe 18. Bevorzugt weist die Rampe 18 eine Höhe auf, die der Höhe der Ladefläche 19 entspricht, so dass die Ladeplattform 15 die Ladefläche 19 des Lastkraftwagens 10 und die Oberseite der Rampe 18 horizontalgerichtet überbrückt. Dabei liegt eine sogenannte Spitze 20 an der vom Lastkraftwagen 10 weggerichteten hinteren Querkante der Ladeplattform 15 auf einem vorderen Bereich der Oberseite der Rampe 18 auf.

In der Darstellung der Fig. 1 befindet sich ein Gegenstand 21, womit der Lastkraftwagen 10 zu beladen ist, noch auf der Rampe 18. Der Lastkraftwagen 10 ist also noch unbeladen oder zumindest nicht mit dem symbolisch in der Fig. 1 dargestellten Gegenstand 21 beladen. Die Federungen insbesondere der Hinterachse 22 des Lastkraftwagens 10 sind dabei noch relativ unbelastet. In der Darstellung der Fig. 2 ist der Lastkraftwagen 10 mit dem Gegenstand 21 beladen, und zwar so, dass sich der Gegenstand 21 etwa über der Hinterachse 22 des Lastkraftwagens 10 befindet. Durch das Gewicht des Gegenstands 21 federt die Hinterachse 22 des Lastkraftwagens 10 ein. Diese Einfederung ist in der Fig. 2 zum Zwecke der besseren Erkennbarkeit übertrieben dargestellt.

Die beim Beladen erfolgende Einfederung der Hinterachse 22 des Lastkraftwagens 10 führt dazu, dass die Hubladebühne 12 sich mit der Spitze 20 der Ladeplattform 15 auf der Rampe 18 abstützt. Dadurch wird das Gewicht des auf der Ladefläche 19 ruhenden Gegenstands 21 teilweise in das Hubwerk 13 und die Ladeplattform 15 der Hubladebühne 12 eingeleitet und dabei vor allem die mechanischen Lineartriebe sowohl zum Verschwenken als auch zum Heben und Senken der Ladeplattform 15 belastet, weil die Bremsen betätigt sein müssen.

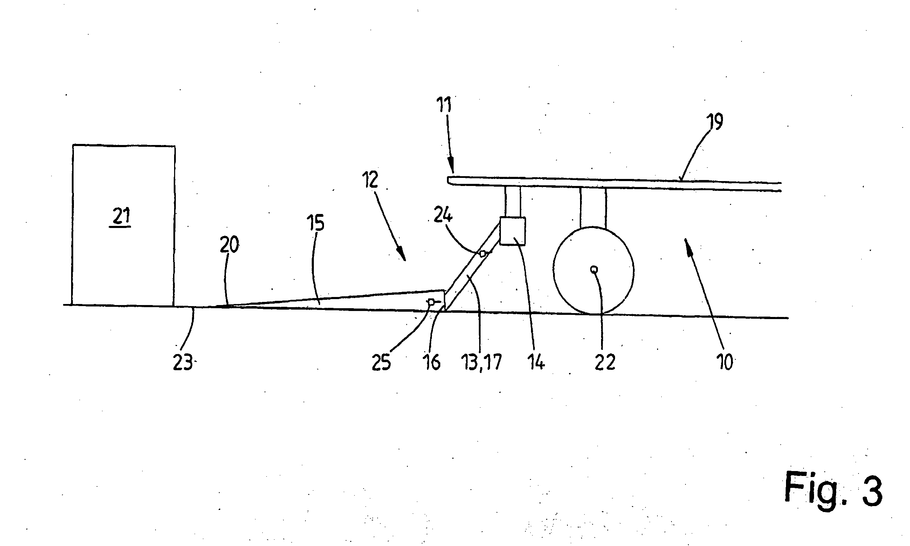

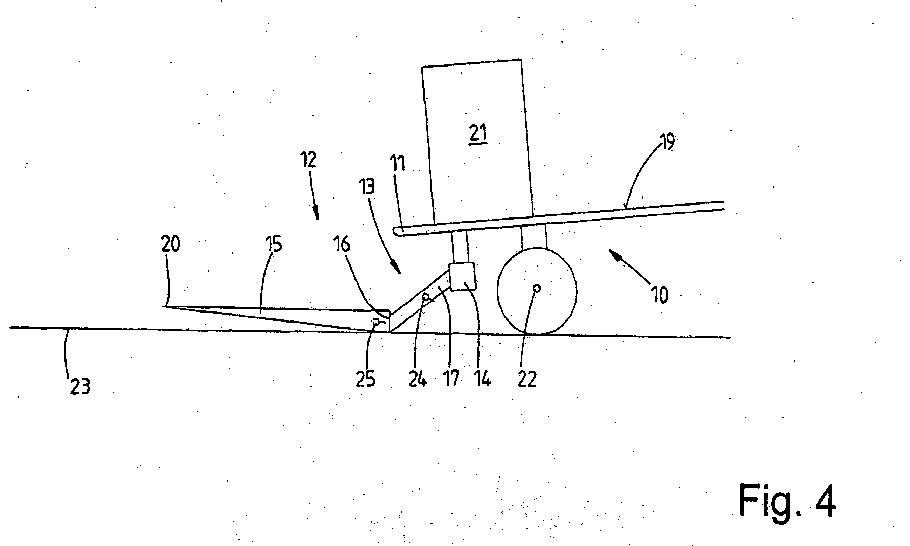

Die Fig. 3 und 4 zeigen einen anderen Fall der Beladung des Lastkraftwagens 10 vom Boden 23 aus. Hier ist die Ladeplattform 15 vollständig auf dem Boden 23 abgesenkt und so verschwenkt, dass die Spitze 20 der Ladeplattform 15 auf dem Boden 23 aufliegt, wenn der Gegenstand 21, womit der Lastkraftwagen 10 beladen werden soll, sich noch am Boden 10 befindet (Fig. 3). Nachdem der Lastkraftwagen 10 mit dem Gegenstand 21 beladen ist, indem sich der Gegenstand 21 etwa über der Hinterachse 22 auf der Ladefläche 19 befindet, federt die Hinterachse 22 des Lastkraftwagens 10 ein, was zur besseren Erkennbarkeit in der Fig. 4 wiederum übertrieben dargestellt ist. Dabei wird die Ladeplattform 15 mit ihrer zur Rückseite 11 des Lastkraftwagens 10 weisenden Querkante 16 auf den Boden 23 gedrückt. Infolge der Anlage der Querkante 16 der Ladeplattform 15 auf dem Boden 23 wird die Ladeplattform 15 hochgeschwenkt, wodurch die Spitze 20 der Ladeplattform 15 sich etwas vom Boden 23 abhebt. Durch die mit der Querkante 16 auf dem Boden 23 aufliegenden Ladeplattform 15 trägt diese einen Teil des Gewichts des Gegenstands 21 auf der Ladefläche 19 des Lastkraftwagens 10. Das führt zu einer Belastung der durch Selbsthemmung oder eingerückte Bremsen längenunveränderlichen mechanischen Lineartriebe.

Die Hubladebühne 12 verfügt erfindungsgemäß über Sensoren, die unterschiedlichen Komponenten der Hubladebühne 12 zugeordnet sind und Bewegungen dieser Komponenten detektieren. Im gezeigten Ausführungsbeispiel handelt es sich bei den Sensoren um Neigungssensoren 24, 25, die Winkel detektieren bzw. messen. Ein Neigungssensor 24 ist dem Hubwerk 13, und zwar im gezeigten Ausführungsbeispiel einem Lenkerarm 17 desselben, zugeordnet. Der andere Neigungssensor 25 befindet sich an der Ladeplattform 15, nämlich im gezeigten Ausführungsbeispiel einer aufrechten Seitenwandung desselben.

Die Signale der Neigungssensoren 24, 25 werden an eine nicht gezeigte Steuerung weitergeleitet, die die Signale auswertet, umrechnet und/oder mit Vorgaben vergleicht. Dementsprechend betätigt die Steuerung die Bremsen der Lineartriebe oder Motoren zum Antrieb insbesondere selbsthemmender Lineartriebe.

Ein Vergleich der Fig. 1 und 2 verdeutlicht, wie der Lastkraftwagen 10 oder ein anderes Fahrzeug hinten einfedert, wodurch die Hubladebühne 12 an der auf der Rampe 18 aufliegenden Spitze 20 der Ladeplattform 15 hochgedrückt wird. Durch das Hochdrücken der Ladeplattform 15 ändert sich der Winkel derselben, was vom Neigungssensor 25 detektiert wird. Durch das Einfedern der Rückseite 11 des mit dem Gegenstand 21 beladenen Lastkraftwagens 10 wird die Ladefläche 19 des Lastkraftwagens 10 geneigt. Infolge dessen ändert sich auch die Richtung des die Ladeplattform 15 tragenden Hubwerks 13, wodurch auch der Neigungssensor 24 am Lenkerarm 17 des Hubwerks 13 eine Neigungsänderung detektiert.

Bei einem Vergleich der Fig. 3 und 4 wird ersichtlich, dass durch die Einfederung beim Beladen des Lastkraftwagens 10 oder eines anderen Fahrzeugs, wobei es sich auch um ein gezogenes Fahrzeug wie einen Anhänger handeln kann, die Hubladebühne 12 mit der am Hubwerk 13 befestigten Querkante 16 der Ladeplattform 15 sich auf dem Boden 13 abstützt, wodurch die Spitze 20 der Ladeplattform 15 vom Boden 23 abgehoben wird. Dieses wird vom Neigungssensor 25 detektiert. Außerdem wird beim Abstützen der Hubladebühne 12 auf dem Boden 23 das Hubwerk 13 etwas hochbewegt, wodurch sich die Richtung der Lenkerarme 17 ändert. Diese Änderung wird vom Neigungssensor 24 erfasst.

Die Steuerung der Hubladebühne 12 kann so gestaltet sein, dass sie bei bestimmten Bedienerbefehlen, beispielsweise beim Absenken der Ladeplattform 15 auf den Boden 23, die von den Neigungssensoren 24 und 25 ständig ermittelten Messwerte dahingehend überprüft, ob die Neigung der Ladeplattform 15 oder der Lenkerarme 17 sich verändert.

Das erfindungsgemäße Verfahren wird nachfolgend näher erläutert:
Werden die Neigungssensoren 24 bzw. 25 oder ein sonstiger Bewegungen einzelner Komponenten der Hubladebühne 12 ständig erfassender oder messender Sensor eingesetzt, um als Überlastsicherung oder Endlagenschalter zu dienen, werden von der Steuerung der Hubladebühne 12 laufend von den Neigungssensoren 24, 25 übermittelte Messwerte dahingehend ausgewertet, ob mindestens ein Neigungssensor 24, 25 noch eine Bewegung, insbesondere Schwenkbewegung, der Ladeplattform 15 und/oder des Lenkerarms 17 detektiert. Stellt die Steuerung fest, dass mindestens ein Neigungssensor 24, 25 keine Bewegung mehr feststellt, wird der entsprechende Antrieb, und zwar zum Verschwenken der Ladeplattform 15 und/oder zum Absenken der Ladeplattform 15 unterbrochen.

Vorzugsweise ist die Steuerung so ausgebildet, dass der Antrieb eines oder mehrerer Lineartriebe des Hubwerks 13 nicht sofort unterbrochen wird, wenn keine Winkeländerung der Ladeplattform 15 und/oder des Lenkerarms 17 mehr festgestellt wird, sondern erst dann, wenn über einen vorbestimmbaren Zeitraum hinweg vom Neigungssensor 24 bzw. 25 keine Bewegung der Ladeplattform 15 bzw. des Lenkerarm 17 mehr festgestellt worden ist. Dadurch ist sichergestellt, dass die Bewegung der Hubladebühne 12 tatsächlich nur dann abgeschaltet wird, wenn die Ladeplattform 15 oder ein Lenkerarm 17 sich in einer Endposition befindet.

Die vorstehend beschriebenen von den Neigungssensoren 24 bzw. 25 ausgelösten Endabschaltungen der Antriebe der Hubladebühne 12 erfolgen nur bei bestimmten, ausgewählten Bewegungsbefehlen, bei denen die Gefahr besteht, dass durch ein unvorhergesehenes Hindernis oder dergleichen die Ladeplattform 15 nicht in ihre vorgesehene Position gelangen kann. Beispielsweise handelt es sich um Bewegungsbefehle zum Verschwenken der Ladeplattform 15 in die Horizontale oder zum Absenken der Ladeplattform 15 auf den Boden.

Die Neigungssensoren 24 und 25 dienen erfindungsgemäß außerdem dazu, die beim Beladen des Lastkraftwagens 10 erfolgende Einfederung, wodurch auf die Hubladebühne 12 eine Kraft im schließenden Sinne oder im anhebenden Sinne der Ladeplattform 15 ausgeübt wird, auszugleichen, indem die Hubladebühne 12 mit zunehmender Einfederung der Rückseite 11 des Lastkraftwagens 10 entlastet bzw. entspannt wird. Dieses geschieht bei mechanischen Lineartrieben der Hubladebühne 12, die nicht selbsthemmend und deshalb von Bremsen gehalten werden, durch erforderlichenfalls wiederholtes kurzfristiges Lösen der Bremsen, was automatisch von der Steuerung der Hubladebühne 12 erfolgt. Ausgelöst wird das Lösen der Bremse von an die Steuerung weitergegebenen Signale der Neigungssensoren 24, 25 an der Ladeplattform 15 und an einem Lenkerarm 17 der Hubladebühne 12.

Im Falle der Beladung des Lastkraftwagens 10 von der Rampe 18 aus (Fig. 1 uns 2) werden vor Beginn des Beladevorgangs die von den Neigungssensoren 24 und 25 ermittelten Winkelwerte subtrahiert und die Differenz in der Steuerung abgespeichert. Wenn nun durch Beladung des Lastkraftwagens 10 mit dem Gegenstand 21 oder weiteren Gegenständen die Rückseite 11 des Lastkraftwagens 10 zunehmend einfedert, also sich absenkt, wird durch die auf der Rampe 18 aufliegende Spitze 20 die Ladeplattform 15 bedingt durch das Spiel insbesondere in den mechanischen Lineartrieben etwas im schließenden Sinne hochgeschwenkt, bis das Spiel beseitigt ist, und dieses vom Neigungssensor 25 an der Ladeplattform 15 detektiert. Gleichzeitig ändert sich durch die Einfederung der Rückseite 11 des Lastkraftwagens 10 auch die Neigung des Lenkerarms 17 des Hubwerks 13, was von Neigungssensoren 24 erfasst wird. Die Steuerung bildet wiederum die Differenz der aktuell ermittelten Winkelwerte der Neigungssensoren 24 und 25. Sobald die Differenz der aktuell ermittelten Werte von der Differenz der Winkelwerte des unbeladenen Lastkraftwagens 10 um mehr als einen vorherbestimmten Unterschiedsbetrag abweicht, veranlasst die Steuerung automatisch ein kurzzeitiges Lösen der Bremsen mindestens der mechanischen Lineartriebe zum Verschwenken der Ladeplattform 15, wodurch alle Lineartriebe und die gesamte Hubladebühne 12 entspannt werden.

Bei zunehmender Beladung des Lastkraftwagens 10, wenn nämlich eine Hinterachse 22 weiter einfedert, kann die Steuerung ein mehrfaches, zeitlich aufeinanderfolgendes Lösen der Bremsen mindestens des Lineartriebs zum Verschwenken der Ladeplattform 15 veranlassen.

Das erfindungsgemäße Verfahren läuft beim Beladen des Lastkraftwagens 10 mit einem auf dem Boden 23 stehenden Gegenstand 21 prinzipiell genauso ab wie beim vorstehend beschriebenen Verfahren, nämlich der Beladung des Lastkraftwagens 10 von der Rampe 18 aus. Beim Beladen des Lastkraftwagens 10 vom Boden 23 aus ist die Ladeplattform 15 auf dem Boden 23 abgesenkt.

Sobald der Gegenstand 21 hinten auf der Ladefläche 19 positioniert ist, federt die Hinterachse 22 ein, wodurch sich die Rückseite 11 der Ladefläche 19 absenkt und sich mit zunehmendem Maße die Rückseite 11 des Lastkraftwagens 10 an der sich auf dem Boden 23 aufliegenden Ladeplattform 15 abstützt. Mit anderen Worten stützt die Hubladebühne 12 das Heck des Lastkraftwagens 10 mit zunehmender Beladung desselben ab. Dadurch wird vor allem das Hubwerk 13 der Hubladebühne 12 vorgespannt. Zuvor wird aber das Spiel in den Spindeltrieben oder anderen mechanischen Lineartrieben und die Verbindungen derselben mit dem Hubwerk 13 und der Ladeplattform 15 beseitigt, wodurch es insbesondere zu einem geringfügigen Hochschwenken der Ladeplattform 15 kommt (Fig. 4). Dieses wird vom Neigungssensor 25 an der Ladeplattform 15 detektiert. Nachdem der Neigungssensor 25 ein Hochschwenken der Spitze 20 der Ladeplattform 15 um einen vorher festgelegten Winkelbetrag festgestellt hat, werden von der Steuerung die Bremsen der Lineartriebe gelöst, sodass sich die Lineartriebe und das Hubwerk 13 entspannen, wonach insbesondere die Ladeplattform 15 wieder wie in der Fig. 3 dargestellte Stellung mit auf dem Boden 23 aufliegender Spitze 20 einnimmt.

Denkbar ist es auch, das Verfahren zum Anpassen der Ladeplattform 15 an die Einfederung beim Beladen des Lastkraftwagens 10 in Abhängigkeit von der Differenz der Winkelsignale beider Neigungssensoren 24 und 25 zu steuern, beispielsweise so, wie es im Zusammenhang mit dem Verfahren der Fig. 1 und 2 erläutert wurde.

Bei selbsthemmenden mechanischen Lineartrieben, insbesondere Spindeltrieben, die über keine Bremsen verfügen, werden die vorstehend beschriebenen Verfahren dahingehend abgeändert, dass zum Entspannen der Hubladebühne 12 kurzzeitig vorzugsweise elektromotorische Antriebe der Lineartriebe im hochschwenkenden und/oder anhebenden Sinne der Ladeplattform 15 betrieben werden, was ebenfalls ein Spannungsabbau insbesondere im Hubwerk 13 der Hubladebühne 12 zur Folge hat, wenn beim Beladen die Rückseite 11 des Lastkraftwagens 10 mehr einfedert, als das vom Spiel in der Hubladebühne 12 allein ausgleichbar ist.

### Bezugszeichenliste

- 10: Lastkraftwagen
- 11: Rückseite
- 12: Hubladebühne
- 13: Hubwerk
- 14: Tragrohr
- 15: Ladeplattform
- 16: Querkante
- 17: Lenkerarm
- 18: Rampe
- 19: Ladefläche
- 20: Spitze
- 21: Gegenstand
- 22: Hinterachse
- 23: Boden
- 24: Neigungssensor
- 25: Neigungssensor

## Patentansprüche

1. Verfahren zum Betrieb einer an einem Fahrzeug angeordneten Hubladebühne (12), wobei eine Ladeplattform (15) der Hubladebühne (12) von einem Elektromotor betriebenen mechanischen Linearantriebe aufweisenden Hubwerk (13) der Hubladebühne (12) angehoben, abgesenkt bzw. verschwenkt wird, wobei dass eine in Abhängigkeit von der Einfederung des Fahrzeugs erfolgende Lageänderung der Hubladebühne (12) sensorisch erfasst wird, indem Sensoren die Winkelstellung der Ladeplättform (15) und die Winkelstellung mindestens eines Lenkerarms (17) des Hubwerks (13) der Hubladebühne (12) ermitteln, und dementsprechend die Lage der Ladeplattform (15) verändert wird.

2. Verfahren nach Anspruch 1, **dadurch gekennzeichnet, dass** Winkelstellungen ausgewählter Komponenten der Hubladebühne (12) beim Beladen des Fahrzeugs ermittelt und beim Überschreiten einer bestimmten Abweichung wenigstens einer der ermittelten Winkelstellungen die Lage der Ladeplattform (15) entsprechend angepasst wird.

3. Verfahren nach Anspruch 1 oder 2, **dadurch gekennzeichnet, dass** die Anpassung der Lage der Ladeplattform (15) nach einem Lösen wenigstens einer Bremse der mechanischen Lineartriebe der Ladeplattform (15) selbsttätig erfolgt.

4. Verfahren nach einem der Ansprüche 1 oder 2, **dadurch gekennzeichnet, dass** das Anpassen der Lage der Ladeplattform (15) durch einen Antrieb des jeweiligen Lineartriebs erfolgt.

5. Verfahren nach Anspruch 1, **dadurch gekennzeichnet, dass** von den Sensoren die Winkelstellung der Ladeplattform (15) und die Winkelstellung mindestens eines Lenkerarms (17) des Hubwerks (13) fortlaufend ermittelt werden.

6. Verfahren nach Anspruch 1 oder 4, **dadurch gekennzeichnet, dass** eine Differenz der Winkelwerte der Sensoren, die der Einfederung vor dem Beladen des Fahrzeugs entsprechen, gebildet wird und diese Differenz verglichen wird mit einer Differenz der beim Beladen ermittelten Winkelwerte, wobei ab einer bestimmten Abweichung der Winkelwerte die Bremse der mechanischen Lineartriebe kurzzeitig gelöst oder der Antrieb der mechanischen Lineartriebe eingeschaltet wird.

7. Verfahren zum Betrieb einer an einem Fahrzeug angeordneten Hubladebühne (12), wobei eine Ladeplattform (15) der Hubladebühne (12) von einem mechanische Lineartriebe aufweisenden Hubwerk (13) angehoben, abgesenkt bzw. verschwenkt wird, **dadurch gekennzeichnet, dass** ein Antrieb der mechanischen Lineartriebe der Ladeplattform (15) abgeschaltet wird, wenn eine sensorisch laufend ermittelte Relativposition mindestens einer Komponente der Hubladebühne (12) sich nicht verändert.

8. Verfahren nach Anspruch 7, **dadurch gekennzeichnet, dass** der Antrieb der mechanischen Lineartriebe abgeschaltet wird, wenn bei der laufenden Ermittlung der Relativpositionen mindestens einer Komponente der Hubladebühne (12) festgestellt wird, dass die Relativposition der betreffenden Komponente der Hubladebühne (12) über ein bestimmtes Zeitintervall hinweg sich nicht geändert hat.

9. Verfahren nach Anspruch 7 oder 8, **dadurch gekennzeichnet, dass** die Relativbewegung mindestens einer Komponente der Hubladebühne (12) nur bei solchen Steuerbefehlen der Hubladebühne (12) ermittelt wird, bei denen eine Überlastung des betreffenden mechanischen Lineartriebs entstehen kann.

10. Hubladebühne zum Anbau an ein Fahrzeug mit einer Ladeplattform (15) und einem mindestens einen von einem Elektromotor betriebenen mechanischen Lineartrieb aufweisenden Hubwerk (13) zum Heben, Senken und/oder Verschwenken der Ladeplattform (15), wobei der Ladeplattform (15) und dem Hubwerk (13) jeweils ein Bewegungen erfassender Sensor zugeordnet ist und eine Steuerung für Bremsen oder Elektromotore der mechanischen Lineartriebe vorgesehen ist zum gezielten Lösen der Bremsen oder Betrieb der Elektromotore in Abhängigkeit vom Signal mindestens eines Sensors.

11. Hubladebühne nach Anspruch 10, **dadurch gekennzeichnet, dass** die Sensoren als Winkelwerte erfassende Neigungssensoren (24, 25) ausgebildet sind.

12. Hubladebühne nach Anspruch 10 oder 11, **dadurch gekennzeichnet, dass** die Neigungssensoren (24, 25) an der Ladeplattform (15) und einem Lenkerarm (17) des Hubwerks (13) angeordnet sind.

## Claims

1. Method for operating a tail lift (12) which is arranged on a vehicle, wherein a loading platform (15) of the tail lift (12) is raised, lowered and/or pivoted by a lifting mechanism (13) of the tail lift (12), said lifting mechanism having a mechanical linear drive which is operated by an electric motor, wherein a change in position of the tail lift (12) which occurs depending on the spring deflection of the vehicle is detected using sensors, by sensors determining the angular position of the loading platform (15) and the angular position of at least one link arm (17) of the lifting mechanism (13) of the tail lift (12), and the position of the loading platform (15) is accordingly changed.

2. Method according to Claim 1, **characterized in that** angular positions of selected components of the tail lift (12) are determined during loading of the vehicle, and the position of the loading platform (15) is accordingly adjusted when a specific deviation of at least one of the determined angular positions is exceeded.

3. Method according to Claim 1 or 2, **characterized in that** the position of the loading platform (15) is adjusted after at least one of the brakes of the mechanical linear drive mechanisms of the loading platform (15) is automatically released.

4. Method according to either of Claims 1 and 2, **characterized in that** the position of the loading platform (15) is adjusted by driving of the respective linear drive mechanism.

5. Method according to Claim 1, **characterized in that** the angular position of the loading platform (15) and the angular position of at least one link arm (17) of the lifting mechanism (13) are continuously determined by the sensors.

6. Method according to Claim 1 or 4, **characterized in that** the difference in the angular values of the sensors, which angular values correspond to the spring deflection before the vehicle is loaded, is calculated, and this difference is compared with a difference in the angular values which are determined during loading, wherein, starting from a specific deviation in the angular values, the brake of the mechanical linear drive mechanisms is briefly released or the driving of the mechanical linear drive mechanisms is activated.

7. Method for operating a tail lift (12) which is arranged on a vehicle, wherein a loading platform (15) of the tail lift (12) is raised, lowered and/or pivoted by a lifting mechanism (13) which has mechanical linear drive mechanisms, **characterized in that** driving of the mechanical linear drive mechanisms of the loading platform (15) is deactivated when a relative position of at least one component of the tail lift (12), which relative position is continuously determined using sensors, does not change.

8. Method according to Claim 7, **characterized in that** the driving of the mechanical linear drive mechanisms is deactivated when it is established during the continuous determination of the relative positions of at least one component of the tail lift (12) that the relative position of the component of the tail lift (12) in question has not changed over a specific time interval.

9. Method according to Claim 7 or 8, **characterized in that** the relative movement of at least one component of the tail lift (12) is determined only in the case of those control commands to the tail lift (12) with which overloading of the mechanical linear drive mechanism in question can occur.

10. Tail lift for attachment to a vehicle, having a loading platform (15) and a lifting mechanism (13), which has at least one mechanical linear drive mechanism which is operated by an electric motor, for lifting, lowering and/or pivoting the loading platform (15), wherein the loading platform (15) and the lifting mechanism (13) each have an associated sensor which detects movements, and a control means for brakes or electric motors of the mechanical linear drive mechanisms is provided for targeted release of the brakes or operation of the electric motors depending on the signal from at least one sensor.

11. Tail lift according to Claim 10, **characterized in that** the sensors are designed as inclination sensors (24, 25) which detect angular values.

12. Tail lift according to Claim 10 or 11, **characterized in that** the inclination sensors (24, 25) are arranged on the loading platform (15) and a link arm (17) of the lifting mechanism (13).

## Revendications

1. Procédé pour faire fonctionner un hayon élévateur (12) disposé sur un véhicule, une plate-forme de chargement (15) du hayon élévateur (12) étant soulevée, abaissée ou pivotée par un mécanisme de levage (13) du hayon élévateur (12) présentant un entraînement linéaire mécanique entraîné par un moteur électrique, une variation de position du hayon élévateur (12) produite en fonction de l'enfoncement de la suspension du véhicule étant détectée par des capteurs, des capteurs déterminant la position angulaire de la plate-forme de chargement (15) et la position angulaire d'au moins un bras oscillant (17) du mécanisme de levage (13) du hayon élévateur (12) et la position de la plate-forme de chargement (15) étant modifiée en conséquence.

2. Procédé selon la revendication 1, **caractérisé en ce que** les positions angulaires de composants sélectionnés du hayon élévateur (12) lors du chargement du véhicule sont déterminées et en cas de dépassement d'un écart déterminé d'au moins l'une des positions angulaires déterminées, la position de la plate-forme de chargement (15) est adaptée de manière correspondante.

3. Procédé selon la revendication 1 ou 2, **caractérisé en ce que** l'adaptation de la position de la plate-forme de chargement (15) s'effectue automatiquement après un desserrage d'au moins un frein des entraînements linéaires mécaniques de la plate-forme de chargement (15).

4. Procédé selon l'une quelconque des revendications 1 ou 2, **caractérisé en ce que** l'adaptation de la position de la plate-forme de chargement (15) s'effectue par un entraînement de l'entraînement linéaire respectif.

5. Procédé selon la revendication 1, **caractérisé en ce que** la position angulaire de la plate-forme de chargement (15) et la position angulaire d'au moins un bras oscillant (17) du mécanisme de levage (13) sont déterminées en continu par les capteurs.

6. Procédé selon la revendication 1 ou 4, **caractérisé en ce qu'**une différence des valeurs angulaires des capteurs, qui correspondent à un enfoncement de la suspension avant le chargement du véhicule, est calculée et cette différence est comparée à une différence des valeurs angulaires déterminées lors du chargement, et à partir d'un écart déterminé des valeurs angulaires, le frein des entraînements linéaires mécaniques étant brièvement desserré ou l'entraînement des entraînements linéaires mécaniques étant enclenché.

7. Procédé pour faire fonctionner un hayon élévateur (12) disposé sur un véhicule, une plate-forme de chargement (15) du hayon élévateur (12) étant soulevée, abaissée ou pivotée par un mécanisme de levage (13) présentant des entraînements linéaires mécaniques, **caractérisé en ce qu'**un entraînement des entraînements linéaires mécaniques de la plate-forme de chargement (15) est coupé si une position relative d'au moins un composant du hayon élévateur (12) déterminée en continu par des capteurs ne varie pas.

8. Procédé selon la revendication 7, **caractérisé en ce que** l'entraînement des entraînements linéaires mécaniques est coupé lorsque, au cours de la détermination en continu des positions relatives d'au moins un composant du hayon élévateur (12), on constate que la position relative du composant concerné du hayon élévateur (12) n'a pas varié pendant un intervalle de temps déterminé.

9. Procédé selon la revendication 7 ou 8, **caractérisé en ce que** le mouvement relatif d'au moins un composant du hayon élévateur (12) est déterminé seulement dans le cas d'ordres de commande du hayon élévateur (12) avec lesquels une surcharge de l'entraînement linéaire mécanique concerné peut se produire.

10. Hayon élévateur destiné à être monté sur un véhicule avec une plate-forme de chargement (15) et un mécanisme de levage (13) présentant au moins un entraînement linéaire mécanique entraîné par un moteur électrique, pour lever, abaisser et/ou faire pivoter la plate-forme de chargement (15), la plate-forme de chargement (15) et le mécanisme de levage (13) étant associés à chaque fois à un capteur détectant des mouvements et une commande de freins ou de moteurs électriques des entraînements linéaires mécaniques étant prévue pour desserrer de manière spécifique les freins ou pour faire fonctionner les moteurs électriques en fonction du signal d'au moins un capteur.

11. Hayon élévateur selon la revendication 10, **caractérisé en ce que** les capteurs sont réalisés sous forme de capteurs d'inclinaison (24, 25) détectant des valeurs angulaires.

12. Hayon élévateur selon la revendication 10 ou 11, **caractérisé en ce que** les capteurs d'inclinaison (24, 25) sont disposés au niveau de la plate-forme de chargement (15) et d'un bras oscillant (17) du mécanisme de levage (13).
